# FASCICULE DE BREVET EUROPEEN

(11) **EP 0 338 933 B1**
(45) Date de publication et mention de la délivrance du brevet: **01.12.1993**
(21) Numéro de dépôt: 89401106.3
(22) Date de dépôt: 20.04.1989
(51) Int. Cl.: F16F 15/03, G05D 19/02

(54) **Dispositif vibrateur actif à suspension magnétique asservie selon trois axes**
Aktive, in drei Achsen gesteuerte magnetisch aufgehängte Schwingungsvorrichtung
Active magnetically suspended vibration device controlled in three axes

(30) Priorité: 20.04.1988 FR 8805242
(43) Date de publication de la demande: 25.10.1989
(73) Titulaire: SOCIETE DE MECANIQUE MAGNETIQUE, F-27950 Saint-Marcel (FR)
(72) Inventeur: Habermann, Helmut, F-27200 Vernon (FR); Lemerle, Pierre, F-27200 Vernon (FR)
(74) Mandataire: Thévenet, Jean-Bruno

(56) Documents cités:
- EP-A- 0 157 693
- CH-A- 372 880
- DE-A- 2 051 911
- DE-A- 3 540 431
- DE-B- 1 301 668
- DE-C- 325 363
- FR-A- 2 132 911
- FR-A- 2 379 732
- US-A- 3 736 033
- US-A- 4 471 331

## Description

La présente invention a pour objet un dispositif vibrateur actif à suspension magnétique asservie selon trois axes, capable de jouer le rôle d'un amortisseur ou d'un excitateur.

Dans de nombreuses structures, notamment des bâtis de machine, il est nécessaire d'amortir des vibrations engendrées dans la structure par diverses perturbations périodiques ou apériodiques intérieures ou extérieures à la structure, et pouvant provenir par exemple de la présence d'organes mobiles en translation ou en rotation, ou encore d'effets aérodynamiques ou hydrodynamiques.

Pour remédier à cela on utilise couramment des amortisseurs passifs de type hydraulique, pneumatique ou hydropneumatique ou encore à frottement mécanique ou interne. Toutefois, ces dispositifs ne permettent pas d'amortir de façon suffisamment rapide et complète les vibrations susceptibles d'apparaître sur la structure.

On a également proposé de monter directement la structure à stabiliser sur une suspension magnétique active, comme par exemple dans le document de brevet US-A-4 244 629 qui concerne la stabilisation d'une masse en vue d'amortir les oscillations susceptibles d'apparaître dans un plan horizontal. Dans ce cas, la masse à stabiliser est rendue solidaire de deux éléments qui constituent des rotors de palier magnétique radial et sont montés de façon flottante à l'intérieur de deux stators de palier magnétique radial fixés sur le sol. Un tel montage, qui d'ailleurs n'est pas prévu pour amortir des vibrations selon une direction verticale, nécessite l'utilisation d'une paire de paliers magnétiques radiaux comprenant chacun deux paires d'électroaimants, avec les boucles d'asservissement correspondantes et implique le montage d'une part des stators de palier sur le sol ou la plate-forme de support et d'autre part des rotors de palier sur des bras rattachés à la masse à stabiliser. Un tel mode de réalisation qui reste relativement complexe à mettre en oeuvre et n'assure un amortissement efficace que selon un seul plan ne peut donc convenir que pour des applications particulières.

Le document de brevet EP-A-0157 693 décrit par ailleurs un procédé et un dispositif de réduction des vibrations des machines tournantes équipées d'une suspension magnétique active. Ce document implique qu'au moins un palier magnétique radial actif classique soit incorporé à l'intérieur même de la structure à stabiliser, qui ne peut être que le bâti d'une machine tournante, le stator du palier magnétique radial étant solidaire du bâti tandis que le rotor du palier magnétique radial est solidaire de l'arbre tournant de la machine. Un tel dispositif de réduction des vibrations est également limité à des applications spécifiques dans lesquelles les vibrations à amortir sont de type répétitif. De plus, l'incorporation d'éléments de palier magnétique au sein même de la machine à stabiliser, entraîne des opérations de montage qui peuvent être assez complexes lorsque la machine n'est pas dès l'origine équipée d'une suspension magnétique.

Il est par ailleurs au contraire nécessaire, pour certaines applications, de pouvoir engendrer dans une structure des vibrations d'amplitude et de fréquence prédéterminées orientées selon plusieurs directions de l'espace. Dans ce cas, il est possible d'utiliser un ensemble de pots vibrants unidirectionnels rapportés sur la structure, mais en pratique la mise en oeuvre de plusieurs pots vibrants distincts s'avère complexe et les vibrations résultantes sont difficiles à contrôler et maîtriser.

La présente invention vise à remédier aux inconvénients précités et à permettre d'amortir de façon simple et efficace à l'aide d'un dispositif compact et universel les vibrations susceptibles d'apparaître sur une structure, sans qu'il soit nécessaire de modifier l'organisation interne de cette structure, ou au contraire à permettre d'exciter dans une structure des vibrations selon plusieurs directions à l'aide d'un dispositif unique extérieur à la structure.

Ces buts sont atteints grâce à un dispositif vibrateur actif à suspension magnétique asservie selon trois axes, comprenant un corps extérieur creux fixé sur une structure dont les vibrations sont à commander ; un corps intérieur de forme essentiellement sphérique disposé à l'intérieur du corps extérieur creux et comportant des parties ferromagnétiques; six éléments de palier magnétique actif disposés par paires selon trois axes définissant un repère orthogonal pour maintenir le corps sphérique intérieur sans contact à l'intérieur du corps extérieur creux, au moins trois détecteurs de la position du corps intérieur par rapport au corps extérieur creux, au moins un dispositif de détection de vibrations et des circuits d'asservissement recevant des informations des détecteurs de position et du dispositif de détection de vibrations et commandant l'alimentation des six éléments de palier magnétique actif afin de commander la position du corps intérieur de manière à créer sur le corps extérieur creux des forces de réaction qui, selon les besoins, engendrent des vibrations dans la structure ou au contraire s'opposent aux forces des vibrations détectées sur la structure.

Selon une caractéristique particulière, le corps intérieur de forme essentiellement sphérique comprend une masse en matériau non magnétique à la périphérie de laquelle une première armature annulaire en matériau ferromagnétique est ancrée dans une première gorge qui présente une première profondeur prédéterminée et se trouve centrée sur un premier axe dudit repère orthogonal et une seconde armature annulaire en matériau ferromagnétique est ancrée dans une seconde gorge qui présente une seconde profondeur prédéterminée inférieure à ladite première profondeur prédéterminée et se trouve centrée sur un second axe dudit repère orthogonal, la seconde armature annulaire étant elle-même imbriquée dans la première armature annulaire qui comporte des gorges présentant ladite seconde profondeur prédéterminée au voisinage du troisième axe dudit repère orthogonal.

Selon un exemple particulier de réalisation, chaque élément de palier magnétique comprend un stator composé d'une culasse en forme de U en matériau ferromagnétique et des enroulements d'électroaimant disposés autour des deux branches du U de façon symétrique de part et d'autre de l'axe du palier, en regard de l'armature annulaire correspondante du corps intérieur, et un détecteur de la position du corps intérieur est disposé entre les deux branches de chaque élément de palier magnétique selon l'axe de symétrie de ce palier.

Dans ce cas, de façon avantageuse, les première et seconde armatures annulaires sont pourvues de petites encoches pour former en regard de chaque branche de U d'un stator d'élément de palier magnétique une dent dont la largeur dans le sens de la périphérie de l'armature annulaire est égale à celle de la branche de U dudit stator d'élément de palier magnétique afin de créer un effet de bord empêchant une rotation du corps intérieur.

Le corps extérieur creux est constitué par une partie inférieure comprenant un socle sensiblement perpendiculaire à l'un des axes du repère orthogonal et fixé sur la structure à stabiliser et une partie formant cuvette supportant d'une part un premier élément de palier magnétique disposé selon ledit axe et d'autre part les quatre éléments de palier magnétique disposés selon les deux autres axes dudit repère orthogonal et par une partie supérieure formant couvercle sur laquelle est monté le second élément de palier magnétique disposé selon ledit axe.

Le dispositif comprend en outre, des moyens mécaniques d'immobilisation du corps intérieur à l'intérieur du corps extérieur creux en position de repos du dispositif.

Les moyens mécaniques d'immobilisation peuvent être disposés dans les espaces libres ménagés entre les éléments de palier magnétique en exerçant sur le corps intérieur une action selon les sommets d'un cube.

Les moyens mécaniques d'immobilisation comprennent des éléments formant ressort ou des éléments réglables formant butée.

Selon un mode particulier de réalisation, qui facilite la mise en place du corps intérieur dans le corps extérieur creux, le corps intérieur de forme essentiellement sphérique présente à sa périphérie, au voisinage du plan défini par lesdits deux autres axes du repère orthogonal, huit portions aplaties de diamètre réduit formées entre les portions des première et seconde armatures annulaires situées en regard des branches de U de stator des éléments de palier magnétique disposés selon lesdits deux autres axes.

D'autres caractéristiques et avantages de l'invention ressortiront de la description suivante de modes particuliers de réalisation, donnés à titre d'exemples, en référence aux dessins annexés, sur lesquels :
- les figures 1 à 3 sont des vues schématiques en coupe, selon trois plans mutuellement perpendiculaires, d'un exemple de dispositif vibrateur actif conforme à l'invention,
- les figures 4 et 5 sont des vues analogues à celle de la figure 3, avec une échelle différente, montrant des détails de réalisation du corps intérieur du dispositif selon l'invention,
- la figure 6 est une vue analogue à celle de la figure 1, à une échelle différente, montrant une variante de réalisation de moyens d'immobilisation, à l'arrêt, du corps intérieur, et
- la figure 7 est une vue analogue à celle de la figure 2, à une échelle différente, montrant des particularités de réalisation du corps intérieur du dispositif vibrateur.

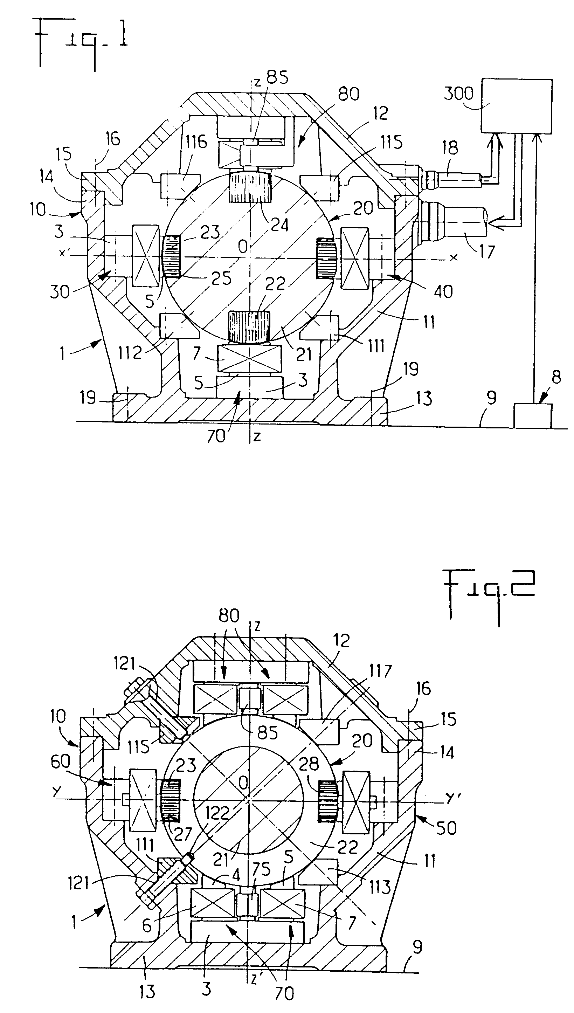

Les figures 1 à 3 montrent un dispositif compact comprenant essentiellement un bloc fermé 1 comportant un corps extérieur creux 10 muni d'une embase 13 fixée par des moyens de liaison 19 sur une structure 9 à stabiliser, telle que par exemple un bâti de machine, un plateau de travail ou une paroi d'un engin ou d'une construction.

Le dispositif comprend en outre un dispositif de détection de vibrations qui est monté sur la structure 9 à stabiliser à proximité du bloc 1 et dans une position relative bien déterminée par rapport à ce bloc 1. Le dispositif 8 de détection de vibrations peut être constitué par un accéléromètre ou un vélocimètre absolu et permet de détecter dans l'espace les vibrations appliquées sur la structure 9 selon trois directions mutuellement perpendiculaires.

Le dispositif vibrateur selon l'invention comprend en outre des circuits d'asservissement 300 qui reçoivent notamment les signaux délivrés par le dispositif 8 de détection de vibrations afin d'asservir la position d'un corps intérieur 20 essentiellement sphérique monté flottant à l'intérieur du corps extérieurcreux 10 formant boîtier, de telle sorte que les déplacements du corps intérieur 20 par rapport au corps extérieur creux 10 provoquent des forces de réaction sur la structure 9 à stabiliser qui s'opposent aux forces des vibrations détectées ou au contraire renforcent ces vibrations selon les applications envisagées.

La position du corps intérieur 20 peut être asservie grâce à un ensemble d'éléments de palier magnétique actif montés dans le corps extérieur creux 10 et capables d'exercer sur le corps intérieur 20 des forces d'attraction dans deux sens opposés selon trois directions mutuellement perpendiculaires XX', YY', ZZ' qui définissent un repère orthogonal centré sur le centre du corps intérieur 20 lorsque celui-ci est placé dans une position d'équilibre.

Les éléments de palier magnétique actif 30,40,50,60,70,80 sont disposés par paires selon les trois axes XX', YY', ZZ' pour maintenir en suspension le corps intérieur 20 sans contact avec le corps extérieur creux 10.

Chaque stator d'un élément de palier magnétique 30,40,50, 60,70,80 peut, comme représenté sur les figures 1 à 3 à titre d'exemple en référence aux éléments 30 et 70, comprendre une culasse 3, 4, 5 en matériau ferromagnétique feuilleté présentant la forme d'un U avec deux pièces polaires 4, 5 définissant un pôle nord et un pôle sud, autour desquelles sont disposés des enroulements d'électro-aimant 6, 7 alimentés par des fils d'alimentation 17, à partir des circuits d'asservissement 300. Les différentes culasses en forme de U des stators des éléments de palier 30, 40, 50, 60 situés dans un même plan XOY peuvent naturellement être constituées à partir d'une pièce unique annulaire 3, pouvant être feuilletée ou non, à partir de laquelle se projettent les diverses pièces polaires 4, 5. Au contraire, le stator de l'élément de palier 70 placé au fond du corps creux 10 et monté sur l'embase 13 selon un axe vertical ZZ', est complètement séparé du stator de l'élément de palier 80 diamétralement opposé selon l'axe ZZ', par rapport au corps intérieur 20. Le stator de l'élément de palier supérieur 80 est en effet monté sur une partie supérieure 12 du corps extérieur creux 10, séparable d'une partie inférieure 11 en forme de cuvette solidaire de l'embase 13. La partie supérieure 12 formant couvercle repose par une bride 15 sur le rebord supérieur 14 de la partie inférieure 11 du corps extérieur creux 10 et peut être rendu solidaire de cette partie inférieure par des moyens de liaison 16.

La constitution du corps extérieur creux 10 en une partie inférieure 11 et une partie supérieure 12 permet un montage aisé de l'ensemble des éléments de l'amortisseur. Le stator de l'élément de palier inférieur 70 est d'abord monté dans le fond de la partie inférieure 11, qui constitue l'embase 13, puis les stators des éléments de palier médians 30, 40, 50, 60 disposés au voisinage du plan XOY pour exercer des actions selon deux axes rectangulaires XX', YY' sont disposés sur un épaulement formé dans la paroi de la partie inférieure 11 formant cuvette. Le corps interne 20 est alors introduit à l'intérieur du corps extérieur creux puis positionné convenablement avant que la partie supérieure 12 portant le stator de l'élément de palier supérieur 80 soit mis en place sur la partie inférieure 11 du corps externe 10 pour définir l'ensemble du bloc 1.

On décrira maintenant de façon plus détaillée le corps intérieur 20. Ce corps intérieur 20 comprend un noyau 21 en matériau non magnétique définissant une forme essentiellement sphérique mais comportant des première et deuxième gorges périphériques 24, 25 (Fig 1) orthogonales présentant des profondeurs différentes et dans lesquelles sont disposés des ensembles de tôles ferromagnétiques annulaires, par exemple en Fe-Si 3 %, destinées à constituer des première et seconde armatures mobiles 22 respectivement 23 coopérant avec les stators des éléments de palier 70, 80 respectivement 30, 40, 50, 60.

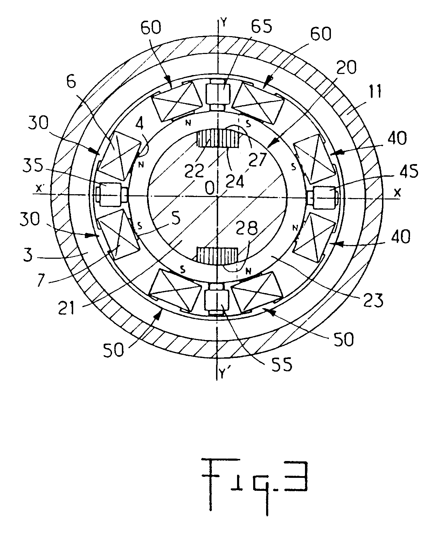

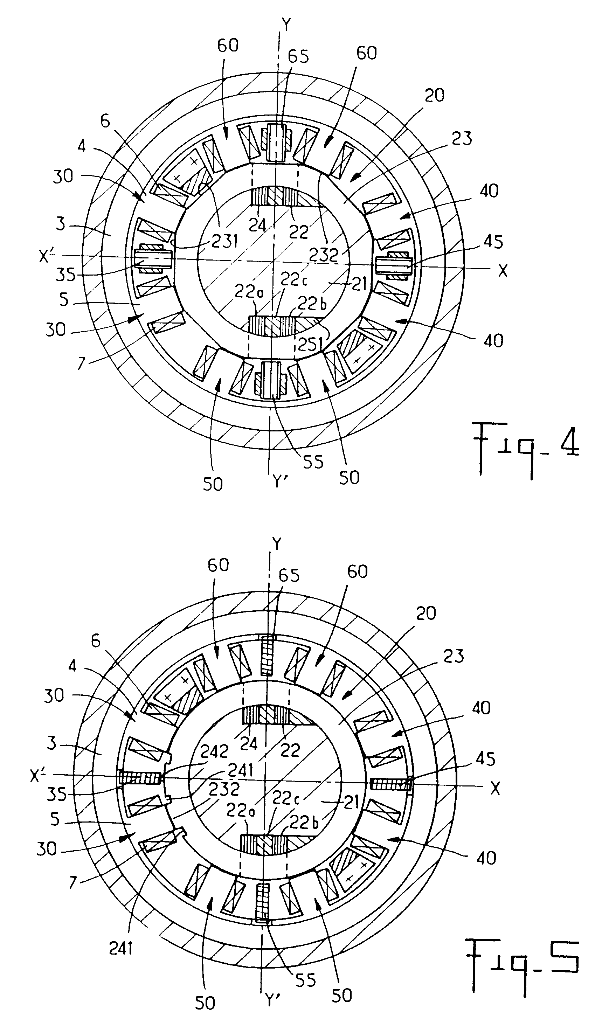

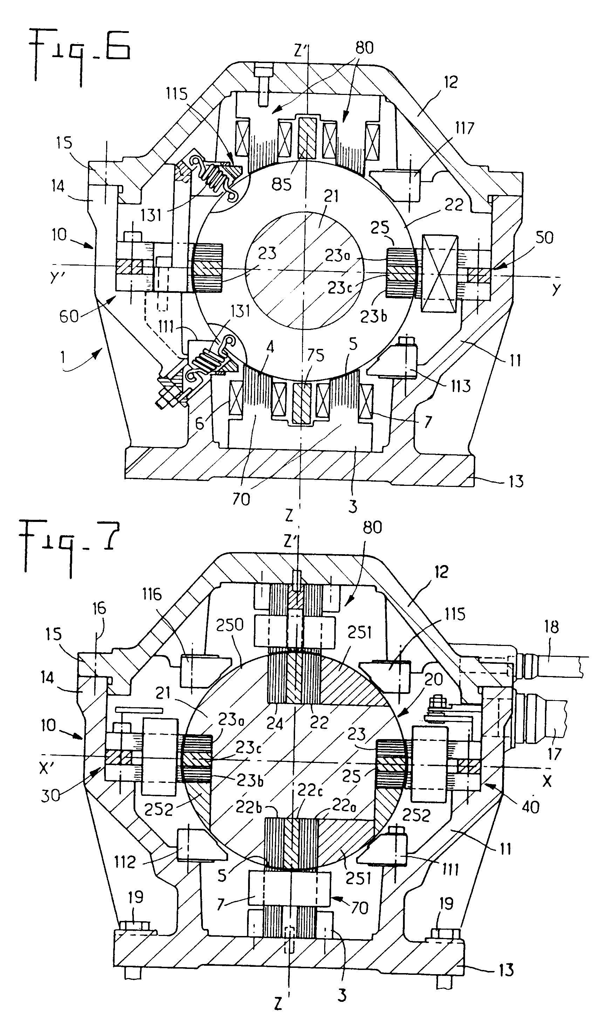

Ainsi, la première armature annulaire 22 en matériau ferromagnétique est ancrée dans une première gorge annulaire 24 de relativement grande profondeur formée à la périphérie du corps intérieur 20 dans le noyau 21 en matériau non magnétique, en étant centrée sur l'axe XX'. La seconde armature annulaire 23 en matériau ferromagnétique est ancrée dans une seconde gorge annulaire 25, de plus faible profondeur que la gorge 24, formée également à la périphérie du corps intérieur 20 dans le noyau 21 en matériau non magnétique, mais en étant centrée sur l'axe ZZ'. Afin de permettre à la seconde armature annulaire 23 de s'imbriquer dans la première annulaire 22, cette dernière présente également des encoches 27, 28 présentant la même profondeur que la gorge 25 et une largeur égale à celle de l'armature 23, de sorte que les armatures annulaires 22 et 23 peuvent se croiser au niveau des éléments de palier 50, 60 situés selon l'axe YY' (Fig 2 et 3) tout en permettant de conserver pour le corps intérieur 20 une surface extérieure sensiblement sphérique. Pour permettre le montage des armatures annulaires 22, 23 sur le noyau 21 en matériau non magnétique, celui-ci est constitué en plusieurs éléments comme cela sera explicité plus loin en référence aux figures 4 à 7.

Le dispositif vibrateur actif selon l'invention comprend essentiellement un corps extérieur creux 10 et un corps intérieur 20 concentriques dont les positions relatives sont asservies pour créer sur la structure 9 sur laquelle est fixée le corps extérieur creux 10 des forces de réaction visant soit à réduire les vibrations auxquelles est soumise cette structure 9 (rôle d'amortisseur du dispositif vibrateur) soit au contraire à engendrer ou amplifier des vibrations qu'il convient de faire naître au sein de la structure 9 (rôle d'excitateur du dispositif vibrateur).

Dans le premier cas, les circuits d'asservissement 300 sont commandés de manière à fonctionner en boucle fermée pour définir un dispositif amortisseur créant sur le corps extérieur creux 10 des forces de réaction s'opposent aux forces de vibrations détectées sur la structure à stabiliser 9.

Dans le second cas, les circuits d'asservissement 300 sont commandés de manière à fonctionner en boucle ouverte pour définir un dispositif excitateur créent sur le corps extérieur creux 10 des forces engendrant dans la structure 9 à déstabiliser des vibrations omnidirectionnelles.

Le dispositif de détection de vibrations peut comprendre un dispositif accélérométrique 8 selon trois directions disposé sur la structure 9 à proximité du corps extérieur creux 10 sur ce dernier.

Le dispositif de détection de vibrations peut toutefois également comprendre un dispositif accélérométrique selon trois dimensions disposé dans une cavité située au centre du corps intérieur 20 et délivrant des signaux de commande de contre-réaction aux circuits d'asservissement 300.

Dans ce qui suit, on considérera plus particulièrement le cas d'un dispositif vibrateur actif selon l'invention utilisé en tant qu'amortisseur.

Comme cela a déjà été indiqué, la position du corps intérieur 20 par rapport au corps extérieur creux 10 est asservie à l'aide des éléments de palier magnétique 30, 40, 50, 60, 70, 80 qui sont alimentés par les fils d'alimentation 17 à partir des circuits d'asservissement 300 commandés par les informations délivrées par le dispositif 8 de détection de vibrations, de telle sorte que les déplacements du corps intérieur 20 provoquent des forces de réaction sur le corps extérieur creux 10 et par suite sur la structure 9 afin de réduire et même annuler les forces de vibration auxquelles est soumise la structure 9. Les circuits d'esservissement 300 comportent ainsi des circuits d'entrée recevant les signaux du dispositif de détection 8 qui effectuent une simple intégration si le dispositif 8 de détection de vibrations est du type vélocimètre, ou une double intégration si le dispositif 8 de détection de vibrations est du type accélérométrique. Le reste de la chaîne d'asservissement des éléments de palier 30, 40, 50, 60, 70, 80 peut ensuite être réalisé de façon classique.

Afin d'éviter que le corps intérieur 20 vienne en contact avec les stators des éléments de palier 30, 40, 50, 60, 70,80, et pour positionner ce corps intérieur 20 dans une position bien centrée à l'intérieur du corps extérieur creux 10 lorsque l'amortisseur est en service et en l'absence de vibrations extérieures, des détecteurs de position 35,45, 55, 65, 75, 85 par exemple de type inductif ou capacitif sont disposés au voisinage de chacun des éléments de palier 30, 40, 50, 60, 70, 80, en regard du corps intérieur 20 et délivrent par les lignes 18 auxcircuits d'asservissement 300 des informations concernant la position du corps intérieur 20 par rapport aux divers éléments de palier magnétique 30, 40, 50, 60, 70, 80. Les signaux délivrés par les détecteurs de position 35, 45, 55, 65, 75, 85 sont ainsi pris en compte par les circuits 300 d'une part pour définir pour le corps intérieur 20 monté flottant à l'intérieur du corps extérieur creux 10 lorsque l'amortisseur est mis en service une position d'équilibre centrée, en l'absence de vibrations à compenser, d'autre part pour limiter l'amplitude des mouvements du corps intérieur 20 en cas de vibrations trop fortes.

Comme représenté sur les figures 1 à 3, les détecteurs 35, 45, 55, 65, 75, 85 peuvent être disposés entre les branches polaires 4, 5 des stators des éléments de palier magnétique 30, 40, 50, 60, 70, 80, ce qui permet de limiter l'encombrement de l'ensemble du système de suspension magnétique.

Afin de pouvoir immobiliser le corps intérieur 20 lorsque l'amortisseur n'est pas en service, c'est-à-dire lorsque les éléments de palier magnétique 30, 40, 50, 60, 70, 80 ne sont pas alimentés à partir des circuits 300, des moyens mécaniques d'immobilisation 111 à 118 sont disposés dans les espaces libres ménagés entre les stators des éléments de palier magnétique 30, 40, 50, 60, 70, 80. Les moyens mécaniques d'immobilisation 111 à 118 peuvent par exemple être au nombre de huit et être positionnés de façon à exercer sur le corps intérieur 20 une action d'immobilisation en des points constituant les sommets d'un cube. Cette disposition n'est cependant pas absolument obligatoire et les moyens mécaniques d'immobilisation 111 à 118 pourraient à la limite n'être qu'au nombre de quatre ou six.

Les moyens mécaniques d'immobilisation 111 118 peuvent être répartis en un premier groupe de quatre moyens mécaniques d'immobilisation 111 à 114 montés sur la partie inférieure 11 formant cuvette du corps extérieur creux 10 et un second groupe de quatre moyens mécaniques d'immobilisation 115 à 118 montés sur la partie supérieure 12 formant couvercle du corps extérieur creux 10. Comme représenté sur la figure 2, les moyens mécaniques d'immobilisation 111 à 118 peuvent être manipulés depuis l'extérieur du corps 1 et peuvent comprendre des vis rétractables 121 permettant d'immobiliser de façon sélective le corps intérieur 20 dans une position prédéterminée en pénétrant dans des trous borgnes 122 formés à la périphérie du corps intérieur 20.

A titre de variante (Fig 6), les moyens mécaniques d'immobilisation 111 à 118 peuvent comprendre des ressorts 131 dont une extrémité est ancrée sur le corps intérieur 20 et l'autre extrémité est rattachée au corps extérieur creux 10 pour empêcher une rotation du corps intérieur 20 lorsque l'amortisseur est au repos.

En fonctionnement normal, c'est-à-dire lorsque les éléments de palier magnétique sont alimentés, la rotation du corps intérieur 20 est empêchée grâce à des moyens particuliers de type suspension passive définis par ce que l'on appelle effet "de bord" des paliers magnétiques. Ainsi, comme cela est représenté sur la figure 5, de petites encoches 241 sont formées sur les armatures annulaires 22, 23 pour définir en regard de chaque branche 4, 5 de U d'un stator 3, 4, 5 d'au moins un élément de palier magnétique tel que l'élément 30, une dent 242 dont la largeur, dans le sens de la périphérie de l'armature annulaire 23, est égale à celle de la branche 4, 5 de U du stator de l'élément 30 concerné. Il est possible de réaliser ainsi des dents 242 en regard des pièces polaires 4, 5 de stator de l'ensemble des éléments de palier magnétique, ou de certains éléments seulement. La définition sur les armatures du corps intérieur 20 de dents correspondant aux pièces polaires 4, 5 de stator permet de créer des efforts de répulsion de type passif entre le corps intérieur 20 et le corps extérieur creux 10 qui empêchent une rotation du corps interne 20.

Selon une variante de réalisation, représentée sur la figure 4, les dents 232 formées sur au moins l'armature 23 du corps intérieur 20 et situées en regard des pièces polaires 4, 5 de stator ne sont pas délimitées par de petite gorges mais par des portions évidées définissant à la périphérie du corps intérieur 20 des parties aplaties 231 de diamètre réduit. De cette manière, un effet de bord est créé au niveau des pièces polaires 4, 5 des stators des éléments de palier 30, 40, 50, 60, mais de plus la mise en place du corps intérieur 20 est facilitée. En effet, le corps intérieur 20 peut être introduit à l'intérieur de la partie inférieure 11 du corps extérieur creux 10 en étant tourné de 45° dans le plan XOY par rapport à sa position normale. De cette façon, les parties aplaties 231 se trouvent en face des pièces polaires 4, 5 des stators d'élément de palier et permettent un libre engagement du corps intérieur 20, malgré la forme incurvée des extrémités des pièces polaires 4, 5 qui présentent, au-dessus du plan XOY, une portion en projection qui définit une section de passage de dimensions inférieures au diamètre normal du corps intérieur 20 (voir figures 1, 2, 6, 7). Le montage complet des éléments de palier 30, 40, 50, 60 peut ainsi être réalisé entièrement avant l'introduction du corps intérieur 20. Après l'introduction dans la partie inférieure 11 du corps extérieur creux 10, il suffit de faire tourner de 45° le corps intérieur 20 autour de l'axe vertical ZZ' pour l'amener dans sa position finale représentée sur la figure 4.

La figure 7 montre que le corps intérieur 20 peut présenter un noyau 21 en matériau non magnétique constitué de plusieurs éléments 250, 251, 252 afin de pouvoir définir en premier lieu des gorges 24, 25 dégagées pour recevoir par simple translation les armatures annulaires ferromagnétiques croisées 22, 23, puis après introduction des armatures 22, 23, permettre de compléter le corps intérieur 20 afin de lui donner une forme essentiellement sphérique. Le noyau 21 en matériau non magnétique peut ainsi comprendre un élément central 250 complété par des pièces complémentaires 251, 252 rapportées après insertion des armatures annulaires ferromagnétiques 22, 23.

Les figures 4 à 7 montrent que les armatures ferromagnétiques annulaires 22, 23 peuvent comprendre deux empilements de tôles 22a, 22b respectivement 23a, 23b séparés par une partie intermédiaire 22c respectivement 23c en matériau non magnétique.

Plusieurs dispositifs vibrateurs actifs selon l'invention peuvent être utilisés simultanément sur une même structure 9 en coopérant avec une pluralité de dispositifs de détection de vibrations disposés sur la structure 9 et reliés à des circuits d'asservissement regroupés dans une commande centralisée utilisant une matrice d'influence.

## Revendications

1. Dispositif vibrateur actif à suspension magnétique asservie selon trois axes, comprenant un corps extérieur creux (10) fixé sur une structure (9) dont les vibrations sont à commander ; un corps intérieur (20) de forme essentiellement sphérique disposé à l'intérieur du corps extérieur creux (10) et comportant des parties ferromagnétiques (22, 23); six éléments de palier magnétique actif (30, 40, 50, 60, 70, 80) disposés par paires selon trois axes (XX', YY',ZZ') définissant un repère orthogonal pour maintenir le corps intérieur (20) sans contact à l'intérieur du corps extérieur creux (10), au moins trois détecteurs (35,45,55,65,75,85) de la position du corps intérieur (20) par rapport au corps extérieur creux (10), au moins un dispositif (8) de détection de vibrations et des circuits d'asservissement (300) recevant des informations des détecteurs de position (35,45,55,65,75,85) et du dispositif (8) de détection de vibrations et commandant l'alimentation des six éléments de palier magnétique actif (30,40,50,60,70,80) afin de commander la position du corps intérieur (20) de manière à créer sur le corps extérieur creux (10) des forces de réaction qui, selon les besoins, engendrent des vibrations dans la structure (9) ou au contraire s'opposent aux forces des vibrations détectées sur la structure (9).

2. Dispositif selon la revendication 1, caractérisé en ce que le corps intérieur (20) de forme essentiellement sphérique comprend une masse (21) en matériau non magnétique à la périphérie de laquelle une première armature annulaire (22) en matériau ferromagnétique est ancrée dans une première gorge (24) qui présente une première profondeur prédéterminée et se trouve centrée sur un premier axe (XX') dudit repère orthogonal (XX',YY',ZZ') et une seconde armature annulaire (23) en matériau ferromagnétique est ancrée dans une seconde gorge (25) qui présente une seconde profondeur prédéterminée inférieure à ladite première profondeur prédéterminée et se trouve centrée sur un second axe (ZZ') dudit repère orthogonal (XX', YY', ZZ'), la seconde armature annulaire (23) étant elle-même imbriquée dans la première armature annulaire (22) qui comporte des gorges (27, 28) présentant ladite seconde profondeur prédéterminée au voisinage du troisième axe (YY') dudit repère orthogonal (XX', YY', ZZ').

3. Dispositif selon la revendication 2, caractérisé en ce que les première et seconde armatures annulaires (22, 23) sont constituées par des empilements de tôles ferromagnétiques.

4. Dispositif selon l'une quelconque des revendications 2 et 3, caractérisé en ce que chaque élément de palier magnétique (30,40,50,60,70,80) comprend un stator composé d'une culasse (3,4,5) en forme de U en matériau ferromagnétique et des enroulements d'électroaimant (6,7) disposés autour des deux branches (4,5) du U de façon symétrique de part et d'autre de l'axe (XX', YY', ZZ') du palier, en regard de l'armature annulaire correspondante (22 ou 23) du corps intérieur (20), et en ce qu'un détecteur (35,45,55,65,75,85) de la position du corps intérieur (20) est disposé entre les deux branches (4,5) de chaque élément de palier magnétique (30,40,50,60,70,80) selon l'axe de symétrie (XX', YY', ZZ') de ce palier.

5. Dispositif selon la revendication 4, caractérisé en ce que les première et seconde armatures annulaires (22, 23) sont pourvues de petites encoches (241) pour former en regard de chaque branche (4, 5) de U d'un stator (3,4,5) d'élément de palier magnétique (30,40,50,60,70,80) une dent (242) dont la largeur dans le sens de la périphérie de l'armature annulaire (22 ou 23) est égale à celle de la branche (4,5) de U dudit stator (3,4,5) d'élément de palier magnétique afin de créer un effet de bord empêchant une rotation du corps intérieur (20).

6. Dispositif selon l'une quelconque des revendications 1 à 5, caractérisé en ce que le corps extérieur creux (10) est constitué par une partie inférieure (11) comprenant un socle (13) sensiblement perpendiculaire à l'un des axes (ZZ') du repère orthogonal (XX', YY', ZZ') et fixé sur la structure (9) et une partie formant cuvette supportant d'une part un premier élément de palier magnétique (70) disposé selon ledit axe (ZZ') et d'autre part les quatre éléments de palier magnétique (30,40,50,60) disposés selon les deux autres axes (XX', YY') dudit repère orthogonal (XX', YY', ZZ') et par une partie supérieure (12) formant couvercle sur laquelle est monté le second élément de palier magnétique (80) disposé selon ledit axe (ZZ').

7. Dispositif selon l'une quelconque des revendications 1 à 6, caractérisé en ce qu'il comprend en outre des moyens mécaniques (111 à 118) d'immobilisation du corps intérieur (20) à l'intérieur du corps extérieur creux (10) en position de repos du dispositif.

8. Dispositif selon la revendication 7, caractérisé en ce que les moyens mécaniques (111 à 118) d'immobilisation sont disposés dans les espaces libres ménagés entre les éléments de palier magnétique (30,40,50,60,70,80) en exerçant sur le corps intérieur (20) une action selon les sommets d'un cube.

9. Dispositif selon la revendication 7 ou la revendication 8, caractérisé en ce que les moyens mécaniques (111 à 118) d'immobilisation comprennent des éléments formant ressort (131) ou des éléments réglables (121) formant butée.

10. Dispositif selon les revendications 4 et 6, caractérisé en ce que le corps intérieur (20) de forme essentiellement sphérique présente à sa périphérie, au voisinage du plan défini par lesdits deux autres axes (XX', YY') du repère orthogonal (XX', YY', ZZ'), huit portions aplaties (231) de diamètre réduit formées entre les portions des première et seconde armatures annulaires (22, 23) situées en regard des branches de U (4,5) de stator des éléments de palier magnétique (30,40,50,60) disposés selon lesdits deux autres axes (XX', YY').

11. Dispositif selon l'une quelconque des revendications 1 à 10, caractérisé en ce que le dispositif (8) de détection de vibrations comprend un accéléromètre ou un vélocimètre absolu, disposé au voisinage du corps extérieur (10) sur celui-ci ou sur la structure (9) dont les vibrations sont à commander.

12. Dispositif selon l'une quelconque des revendications 1 à 11, caractérisé en ce que le dispositif (8) de détection de vibrations comprend un dispositif accélérométrique selon trois dimensions disposédans une cavité située au centre du corps intérieur (20) et délivrant des signaux de commande aux circuits d'asservissement (300).

13. Dispositif selon l'une quelconque des revendications 1 à 12, caractérisé en ce que les circuits d'asservissement (300) sont commandés de manière à fonctionner en boucle fermée pour définir un dispositif amortisseur créant sur le corps extérieur creux (10) des forces de réaction s'opposant aux forces de vibrations détectées sur la structure à stabiliser (9).

14. Dispositif selon l'une quelconque des revendications 1 à 12, caractérisé en ce que les circuits d'asservissement (300) sont commandés de manière à fonctionner en boucle ouverte pour définir un dispositif excitateur créant sur le corps extérieur creux (10) des forces engendrant dans la structure (9) à déstabiliser des vibrations omnidirectionnelles.

15. Dispositif de commande de vibrations sur une structure (9), caractérisé en ce qu'il comprend un ensemble de dispositifs de vibrateurs actifs selon l'une quelconque des revendications 1 à 14, répartis sur la structure et coopérant avec une pluralité de dispositifs de détection de vibrations disposés sur ladite structure et reliés à des circuits d'asservissement regroupés dans une commande centralisée utilisant une matrice d'influence.

## Claims

1. Active vibrator device having magnetic suspension with servo-control along three axes, comprising an outer hollow body (10) fixed to a structure (9) whose vibrations are to be controlled; an inner body (20) which is essentially spherical in shape and which is disposed inside the outer hollow body (10) and having ferromagnetic portions (22, 23); six active magnetic bearing elements (30, 40, 50, 60, 70, 80) disposed in pairs on three axes (XX', YY', ZZ') defining an orthogonal frame of reference and serving to hold the inner body (20) inside the outer hollow body (10) without direct contact, at least three detectors (35, 45, 55, 65, 75, 85) for detecting the position of the inner body (20) relative to the outer hollow body (10) at least one vibration detector device (8) and servo-control circuits (300) receiving information from the position detectors (35, 45, 55, 65, 75, 85) and from the vibration detector device (8) and controlling the supply of power to the six active magnetic bearing elements (30, 40, 50, 60, 70, 80) in order to control the position of the inner body (20) in such a manner as to set up reaction forces on the outer hollow body (10) tending to generate vibrations in the structure (9) or on the contrary to cancel vibration forces detected on the structure (9) , depending on requirements.

2. Device according to claim 1, characterized in that the inner body (20) which is essentially spherical in shape comprises a mass (21) of non-magnetic material having a first annular armature (22) of ferromagnetic material anchored at the periphery thereof in a first groove (24) having a first predetermined depth and centered on a first axis (XX') of said orthogonal frame of reference (XX', YY', ZZ') ; and a second annular armature (23) of ferromagnetic material anchored at the periphery thereof in a second groove (25) having a second predetermined depth which is less than said first predetermined depth and centered on a second axis (ZZ') of said orthogonal frame of reference (XX', YY', ZZ') , the second annular armature (23) interfitting in the first annular armature (22) which includes notches (27, 28) having said second predetermined depth in the vicinity of the third axis (YY') of said orthogonal frame of reference (XX', YY', ZZ').

3. Device according to claim 2, characterized in that the first and second annular armatures (22, 23) are constituted by stacks of ferromagnetic laminations.

4. Device according to any one of claims 2 and 3, characterized in that each magnetic bearing element (30, 40, 50, 60, 70, 80) comprises a stator constituted by a U-shaped yoke (3, 4, 5) of ferromagnetic material with electromagnetic windings (6, 7) wound round the two branches (4, 5) of the U-shape in symmetrical manner on either side of the axis (XX', YY', ZZ') of the bearing, and facing the corresponding annular armature (22 or 23) of the inner body (20), and in that a detector (35, 45, 55, 65, 75, 85) for detecting the position of the inner body (20) is disposed between the two branches (4, 5) of each magnetic bearing element (30, 40, 50, 60, 70, 80) on the axis of symmetry (XX', YY', ZZ') of said bearing.

5. Device according to claim 4, characterized in that the first and second annular armatures (22, 23) are provided with small notches (241) for forming a tooth (242) facing each branch (4, 5) of the stator U-shape (3, 4, 5) of a magnetic bearing element (30, 40, 50, 60, 70, 80), with the width of the tooth in the peripheral direction of the annular armature (22 or 23) being equal to the width of the branch (4, 5) of said stator U-shape (3, 4, 5) of the magnetic bearing element, so as to establish an edge effect preventing the inner body (20) from rotating.

6. Device according to any one of claims 1 to 5, characterized in that the outer hollow body (10) is constituted by a bottom portion (11) constituting a base (13) substantially perpendicular to one of the axes (ZZ') of the orthogonal frame of reference (XX', YY' , ZZ') and fixed to the structure (9) with a cup-forming portion supporting firstly a first magnetic bearing element (70) disposed on said axis (ZZ') and secondly four magnetic bearing elements (30, 40, 50, 60) disposed on the other two axes (XX', YY') of said orthogonal frame of reference (XX', YY', ZZ') , and a lid-forming top portion (12) on which is mounted the second magnetic bearing element (80) disposed on said axis (ZZ').

7. Device according to any one of claims 1 to 6, characterized in that it further includes mechanical locking means (111 to 118) for holding the inner body (20) inside the outer hollow body (10) when the device is in a rest position.

8. Device according to claim 7, characterized in that the mechanical locking means (111 to 118) are disposed in empty gaps provided between the magnetic bearing elements (30, 40, 50, 60, 70, 80) and act on the inner body (20) at points constituting the vertices of a cube.

9. Device according to claim 7 or claim 8, characterized in that the mechanical locking means (111 to 118) include spring-forming elements (131) or adjustable abutment-forming elements (121).

10. Device according to claims 4 and 6, characterized in that the essentially spherical inner body (20) has eight smaller-diameter flats (231) in its periphery in the vicinity of the plane defined by said two other axes (XX', YY') of the orthogonal frame of reference (XX', YY', ZZ') , said flats being formed between the portions of the first and second annular armatures (22, 23) that face the branches of the stator U-shape (4, 5) of the magnetic bearing elements (30, 40, 50, 60) disposed on said two other axes (XX', YY').

11. Device according to any one of claims 1 to 10, characterized in that the vibration detector device (8) comprises an accelerometer or an absolute velocity meter disposed in the vicinity of the outer body (10), on the outer body, or on the structure (9) whose vibrations are to be controlled.

12. Device according to any one of claims 1 to 11, characterized in that the vibration detector device (8) comprises a three dimensional accelerometer device disposed in a cavity situated in the center of the inner body (20), and delivering control signals to the servo-control circuits (300).

13. Device according to any one of claims 1 to 12, characterized in that the servo-control circuits (300) are controlled to operate in closed loop mode in order to define a damper device which sets up reaction forces on the outer hollow body (10) opposing the vibration forces detected on the structure (9) to be stabilized.

14. Device according to any one of claims 1 to 12, characterized in that the servo-control circuits (300) are controlled to operate in open loop mode in order to define an exciter device setting up forces on the outer hollow body (10) for generating omnidirectional vibrations in the structure (9) to be destabilized.

15. Device for controlling vibrations on a structure (9), characterized in that it comprises a set of active vibrator devices according to any one of claims 1 to 14, said active vibrator devices being distributed over the structure and cooperating with a plurality of vibration detector devices disposed on said structure and connected to servo-control circuits which are grouped together in a centralized control unit making use of an influence matrix.

## Patentansprüche

1. Aktive, in drei Achsen gesteuerte magnetisch aufgehängte Schwingungsvorrichtung mit einem hohlen Außenkörper (10), der an einer Struktur (9) befestigt ist, deren Schwingungen zu steuern sind; einem im wesentlichen sphärisch geformten Innenkörper (20), der im Inneren des hohlen Außenkörpers (10) angeordnet ist und ferromagnetische Bereiche (22, 23) aufweist; sechs aktiven Magnetlagerelementen (30, 40, 50, 60, 70, 80), die in Paaren entlang dreier ein orthogonales Bezugssystem definierender Achsen (XX', YY', ZZ') angeordnet sind, um den Innenkörper (20) ohne Kontakt im Inneren des hohlen Außenkörpers (10) zu halten, wenigstens drei Detektoren (35, 45, 55, 65, 75, 85) für die Position des Innenkörpers (20) bezüglich des hohlen Außenkörpers (10), wenigstens einer Schwingungserfassungsvorrichtung (8) und Steuerschaltkreisen (300) die Informationen von den Positionsdetektoren (35, 45, 55, 65, 75, 85) und der Vibrationserfassungsvorrichtung (8) empfangen und die Versorgung der sechs aktiven Magnetlagerelemente (30, 40, 50, 60, 70, 80) steuern, um die Position des Innenkörpers (20) so zu steuern, daß am hohlen Außenkörper (10) Reaktionskräfte erzeugt werden, die bedarfsgemäß Schwingungen in der Struktur (9) hervorrufen oder, im Gegenteil, sich den an der Struktur (9) erfaßten Vibrationskräften entgegensetzen.

2. Vorrichtung nach Anspruch 1,
dadurch gekennzeichnet, daß
der im wesentlichen sphärisch geformte Innenkörper (20) eine Masse (21) aus nicht magnetischem Material umfaßt, an deren Rand eine erste ringförmige Armierung (22) aus ferromagnetischem Material in einer ersten Nut (24) verankert ist, die eine erste vorgegebene Tiefe aufweist und auf einer ersten Achse (XX') des orthogonalen Bezugssystems (XX', YY', ZZ') zentriert ist, und eine zweite ringförmige Armatur (23) aus ferromagnetischem Material in einer zweiten Nut (25) verankert ist, die eine zweite vorgegebene Tiefe aufweist, die geringer als die erste vorgegeben Tiefe ist, und welche Nut auf einer zweiten Achse (ZZ') des orthogonalen Bezugssystems (XX', YY', ZZ') zentriert ist, wobei die zweite ringförmige Armierung (23) ihrerseits in die erste ringförmige Armierung (22) verschachtelt ist, die Nuten (27, 28) umfaßt, welche die vorgegebene zweite Tiefe in der Nähe der dritten Achse (YY') des orthogonalen Bezugssystems (XX', YY', ZZ') aufweisen.

3. Vorrichtung nach Anspruch 2,
dadurch gekennzeichnet, daß
erste und zweite ringförmige Armierung (22, 23) aus Stapeln ferromagnetischer Bleche gebildet sind.

4. Vorrichtung nach einem der Ansprüche 2 und 3,
dadurch gekennzeichnet, daß
jedes Magnetlagerelement (30, 40, 50, 60, 70, 80) einen Stator umfaßt, der aus einem U-förmigen Joch (3, 4, 5) aus ferromagnetischem Material und aus symmetrisch auf beiden Seiten der Achse (XX', YY', ZZ') des Lagers um die beiden Zweige (4, 5) des U angeordneten Elektromagnetwicklungen (6, 7) gegenüber der zugehörigen ringförmigen Armierung (22 oder 23) des Innenkörpers (20) besteht und daß ein Detektor (35, 45, 55, 65, 75, 85) für die Position des Innenkörpers (20) zwischen den zwei Zweigen (4, 5) jedes Magnetlagerelements (30, 40, 50, 60, 70, 80) entlang der Symmetrieachse (XX', YY', ZZ') dieses Lagers angeordnet ist.

5. Vorrichtung nach Anspruch 4,
dadurch gekennzeichnet, daß
erste und zweite ringförmige Armierung (22, 23) mit kleinen Kerben (241) versehen sind um gegenüber jedem Zweig (4, 5) des U's eines Stators (3, 4, 5) eines Magnetlagerelements (30, 40, 50, 60, 70, 80) einen Zahn (242) zu bilden, dessen Breite in Richtung des Umfangs der ringförmigen Armierung (22 oder 23) gleich der des Zweiges (4, 5) des U's des Stators (3, 4, 5) des Magnetlagerelements ist, um einen Kanteneffekt zu bewirken, der eine Drehung des Innenkörpers (20) verhindert.

6. Vorrichtung nach einem der Ansprüche 1 bis 5,
dadurch gekennzeichnet, daß
der hohle Außenkörper (10) aus einem unteren Bereich (11), der einen im wesentlichen zu einer der Achsen (ZZ') des orthogonalen Bezugssystems (XX', YY', ZZ') senkrechten und an der Struktur (9) befestigten Sockel (13) und einen eine Schale bildenden Bereich umfaßt, der einerseits ein erstes, entlang der Achse (ZZ') angeordnetes Magnetlagerelement (70) und andererseits die vier entlang der zwei anderen Achsen (XX', YY') des orthogonalen Bezugssystems (XX', YY', ZZ') angeordneten Magnetlagerelemente (30, 40, 50, 60) haltert, sowie einem einen Deckel bildenden oberen Bereich (12) gebildet ist, an dem das zweite entlang der Achse (ZZ') angeordnete magnetische Lagerelement (80) montiert ist.

7. Vorrichtung nach einem der Ansprüche 1 bis 6,
dadurch gekennzeichnet, daß
sie zusätzlich mechanische Einrichtungen (111 bis 118) zur Immobilisierung des Innenkörpers (20) im Inneren des hohlen Außenkörpers (10) in Ruheposition der Vorrichtung umfaßt.

8. Vorrichtung nach Anspruch 7,
dadurch gekennzeichnet, daß
die mechanischen Immobilisierungseinrichtungen in den zwischen den Magnetlagerelementen (30, 40, 50, 60, 70, 80) geschaffenen Freiräumen angeordnet sind und auf den Innenkörper (20) eine Wirkung in Richtung der Ecken eines Würfels ausüben.

9. Vorrichtung nach Anspruch 7 oder Anspruch 8,
dadurch gekennzeichnet, daß
die mechanischen Immobilisierungseinrichtungen (111 bis 118) Federn (131) bildende Elemente oder Anschläge bildende regelbare Elemente (121) aufweisen.

10. Vorrichtung nach Ansprüchen 4 und 6,
dadurch gekennzeichnet, daß
der im wesentlichen sphärische Innenkörper (20) an seinem Rand in der Nähe der durch die zwei Achsen (XX', YY') des orthogonalen Bezugssystems (XX', YY', ZZ') definierten Ebene acht abgeflachte Bereiche (231) mit verringertem Durchmesser aufweist, die zwischen den Bereichen der ersten und zweiten ringförmigen Armierung (22, 23) gebildet sind, die den Zweigen des U (4, 5) des Stators der entlang der zwei anderen Achsen (XX', YY') angeordneten Magnetlagerelemente (30, 40, 50, 60) gegenüberliegen.

11. Vorrichtung nach einem der Ansprüche 1 bis 10,
dadurch gekennzeichnet, daß
die Schwingungserfassungsvorrichtung ein in der Nähe des Außenkörpers (10) an diesem oder der Struktur (9), deren Schwingungen zu steuern sind, angordnetes Absolutgeschwindigkeits- oder Beschleunigungsmeßgerät umfaßt.

12. Vorrichtung nach einem der Ansprüche 1 bis 11,
dadurch gekennzeichnet, daß
die Schwingungserfassungsvorrichtung (8) eine in einem Hohlraum im Zentrum des Innenkörpers (20) angeordnete Drei-Achsen-Beschleunigungsmeßvorrichtung umfaßt, die Steuersignale an die Steuerschaltkreise (300) liefert.

13. Vorrichtung nach einem der Ansprüche 1 bis 12,
dadurch gekennzeichnet, daß
die Steuerschaltkreise (300) so gesteuert werden, daß sie mit geschlossenem Wirkungskreis arbeiten, um eine Dämpfungsvorrichtung zu definieren, die am hohlen Aussenkörper (10) Reaktionskräfte erzeugt, die den an der zu stabilisierenden Struktur (9) erfaßten Schwingungskräften entgegengerichtet sind.

14. Vorrichtung nach einem der Ansprüche 1 bis 12,
dadurch gekennzeichnet, daß
die Steuerschaltkreise (300) so gesteuert werden, daß sie mit geschlossenem Wirkungskreis arbeiten, um eine Erregervorrichtung zu definieren, die am hohlen Außenkörper (10) Kräfte erzeugt, die in der zu destabilisierenden Struktur (9) Schwingungen in alle Richtungen hervorrufen.

15. Schwingungssteuervorrichtung an einer Struktur (9),
dadurch gekennzeichnet, daß
sie eine Anordnung von aktiven Schwingungsvorrichtungen nach einem der Ansprüche 1 bis 14 auf der Struktur verteilt umfaßt, die mit einer Mehrzahl von auf der Struktur angeordneten Schwingungserfassungsvorrichtungen zusammenwirken und mit Steuerschaltkreisen verbunden sind, die in einer eine Einflußmatrix verwendenden zentralisierten Steuerung zusammengefaßt sind.
